# EUROPEAN PATENT APPLICATION

(11) **EP 2 568 167 A1**
(43) Date of publication of application: **13.03.2013**
(21) Application number: 11180617.0
(22) Date of filing: 08.09.2011
(51) Int. Cl.: F03D 11/00, F16C 17/10

(54) **Direct-drive wind turbine**

(71) Applicant: Siemens Aktiengesellschaft, 80333 München (DE)
(72) Inventor: Pedersen, Bo, 7620 Lemvig (DK); Thomsen, Kim, 7430 Ikast (DK)

(57) **Abstract**

The rotating drive train is connected with a stationary part of the wind turbine via at least one bearing 5, which allows the rotation of the drive train in relation to the stationary part. The at least one bearing 5 is a plain bearing; the bearing comprises at least one cylindrical sliding surface 6 constructed to support radial loads present in the drive train.

The bearing comprises at least two radial bearing surfaces 7, 8 constructed to support axial loads and bending moments present in the drive train. The surface areas of the radial bearing surfaces 7, 8 is dimensioned proportional to a predetermined maximum total load of the bending moments expected in the drive train.

## Description

A wind turbine transfers the energy of moving air into electrical energy. The moving air accelerates the rotor of the wind turbine. The rotation of the rotor is transferred to an electrical generator. The electrical generator transforms the rotational energy into electrical energy.

In the last years the concept of a direct driven wind turbine was established. In a direct driven wind turbine the rotational energy of the rotor is transferred to the generator directly without the use of a gearbox.

In a direct driven wind turbine the rotor of the wind turbine is directly connected to the rotor of the electrical generator. The chain of mechanically connected parts leading from the rotor of the wind turbine to the rotor of the generator is called the drive train of the wind turbine.

To allow the rotational movement and to provide the necessary stability of the rotating parts, the drive train is mounted with at least one bearing. This bearing allows the drive train to rotate. At the same time it provides the necessary stability by supporting the radial and axial loads and the bending moments present in the drive train.

WO 2011/003482 A2 describes a wind turbine main bearing realized to bear a shaft of a wind turbine. The bearing comprises a fluid bearing with a plurality of bearing pads.

The document describes a bearing with a cylindrical bearing surface and a series of trust pads.

The plain bearing has to provide a large surface to withstand the forces present in the drive train. As a consequence the pads used for the cylindrical bearing surface are very large, heavy and difficult to exchange.

It is the aim of the invention to provide a wind turbine with an improved plain bearing.

The aim is reached by the features of the independent claim. Preferred embodiments of the invention are described in the dependent claims.

A rotor of the wind turbine is directly connected with a rotating drive train of the wind turbine; the rotating drive train is directly connected with a rotor of an electrical generator of the wind turbine.

The rotating drive train is connected with a stationary part of the wind turbine via at least one bearing, which allows the rotation of the drive train in relation to the stationary part. The at least one bearing is a plain bearing; the bearing comprises at least one cylindrical sliding surface constructed to support radial loads present in the drive train.

The bearing comprises at least two radial bearing surfaces constructed to support axial loads and bending moments present in the drive train. The surface areas of the radial bearing surfaces is dimensioned proportional to a predetermined maximum total load of the bending moments expected in the drive train.

The drive train of the wind turbine comprises those parts that transfer the energy from the source to the generator. This includes the hub with at least one rotor blade and the rotor of the generator. In some constructive solutions of wind turbines the drive train includes a shaft in addition.

The stationary part of the wind turbine comprises the stator of the generator, the connection between the generator and the support structure, prepared to carry the aggregates of the nacelle of the wind turbine, and the connection to the tower of the wind turbine.

A plain bearing is a bearing without rolling elements, like balls or rollers. A plain bearing is also known as a sliding bearing, a friction bearing or a floating bearing.

The wind acting on the rotor blades at the hub and magnetic forces in the generator introduce loads in the drive train of the wind turbine.

The loads present in the drive train of the wind turbine comprise radial loads, axial loads and bending moments. Maximum total radial and axial loads and maximum total bending moments are predetermined for a certain construction of wind turbine. These maximum total loads have to be supported by the bearing connecting the drive train to the stationary part of the wind turbine.

A cylindrical sliding surface supports the radial loads present in the drive train. Thus the cylindrical sliding surface supports the radial loads present in the system. Thus the cylindrical sliding surface can be calculated and constructed to support the maximum total radial loads present in the drive train.

A radial sliding surface supports the axial loads present in the drive train. The axial loads present in the drive train that act in a first direction can be supported by a first radial sliding surface. The axial loads present in the drive train acting in the second direction, opposite to the first direction, can be supported by a second radial sliding surface.

Thus two radial sliding surfaces that are arranged to support diametrical axial loads can support the maximum total axial loads present in the drive train.

Two radial sliding surfaces that are arranged to support diametrical axial loads also support bending moments present in the drive train. To support the maximum total bending moments expected in the drive train of the wind turbine the surface of the radial sliding surfaces is calculated according to the maximum total bending moments expected.

The capability of the sliding surface to support a certain load is a function of the surface area of the sliding surface. The surface area of the sliding surface has to be dimensioned larger when more loads shall be supported. The size of the surface area is directly proportional to the load that has to be supported.

Thus the surface areas of the radial bearing surfaces can be calculated according to the maximum total bending moment expected to be present in the system.

Thus only one bearing is needed to support the loads present in the drive train of the wind turbine.

Thus the surface areas of the axial and the radial sliding surface of the bearing can be optimized. Thus the sliding surface and the amount of material used are minimized. Thus the bearing is cheaper to manufacture and less heavy.

In a preferred configuration the surface areas of the radial bearing surfaces is indirect proportional to the inner radius of the radial bearing surfaces.

The larger the diameter of the bearing is the less loads of the bending moments have to be supported. The less loads have to be supported the less surface area of the sliding surface is needed to support the loads.

Thus the surface area of the sliding surface can be optimized. Thus the wear of the material can be optimized. Thus the wear of the material can be calculated to fit to the service and maintenance intervals. Thus service and maintenance can be optimized.

The larger the diameter of the bearing the less loads of the bending moments have to be supported by the bearing. Thus the bearing can be optimized. Thus one bearing is sufficient to support the maximum total bending moments present in the drive train.

In a preferred configuration the surface area of each of the radial bearing surfaces is larger then the surface area of the cylindrical sliding surface.

The larger the surface area of the sliding surface is, the more loads can be supported. In the drive train of the wind turbine the sum of the reaction forces of the axial loads and the bending moments exceeds the sum of the reaction forces of the radial load that needs to be supported.

In a wind turbine with one main bearing, the surface area of the radial sliding surface is dimensioned larger then the surface area of the cylindrical sliding surface. Thus the radial sliding surfaces support the bending moments in addition to the axial loads.

Thus the bending moments that are supported by the cylindrical sliding surface are minimized. Thus the bearing construction is short in axial direction. Thus the space taken up by the main bearing is optimized.

In a preferred configuration the bearing connects as a first bearing the rotor and the stator of the wind turbine generator and the first bearing is located at a first end of the generator in respect to the axis of rotation of the generator.

The rotor and the stator of the generator are connected by a bearing to provide a mainly constant air gap between the rotor and the stator. The drive train is connected via a bearing to the stationary part of the wind turbine. For both purposes one bearing can be used that supports the drive train of the wind turbine and the rotor of the generator and connect them to the stationary part of the wind turbine.

Thus the wind turbine comprises only one main bearing. Thus this one bearing connects the whole drive train to the stationary part of the wind turbine. Thus only one bearing is needed and maintenance only has to be performed at one bearing.

Thus the maintenance is faster and cheaper. Also less material is used for one bearing as for separate bearings. Thus the wind turbine is cheaper and less heavy.

The first end of the generator preferably is the end of the generator pointing towards the hub of the wind turbine.

In another preferred construction a second bearing is arranged at a second end of the generator in respect to the axis of rotation of the generator.

A second bearing is arranged at the end opposite to the first end of the generator. This second bearing stabilizes the connection between the rotor and the stator of the generator. Thus the air gap between the rotor and the stator of the generator is even more constant.

In addition the second bearing supports the loads in the drive train. Thus the loads on the first bearing are reduced due to the support of the second bearing. Thus the first bearing doesn't have to support all the loads present in the system. Thus the first bearing can be build smaller. Thus space is saved in the area where the first bearing is connected.

In a preferred embodiment the second bearing is a plain bearing and comprises a cylindrical bearing surface, which is prepared to support radial loads and bending moments of the drive train.

Thus the second bearing can support the drive train due to transferring the radial loads and the bending moments present in the drive train to the stationary part of the wind turbine.

In a preferred embodiment the bearing comprises a segmented sliding-surface. The segments of the sliding-surface are arranged at a rotating part of the bearing, which is connected to the rotating drive train of the wind turbine, or the segments are arranged at a stationary part of the bearing, which is connected to the stationary part of the wind turbine.

The sliding surface of the bearing is segmented into at least two parts. Preferably the segments are arranged along the direction of the rotation of the bearing. The sliding surface can be divided into pads arranged to build the sliding surface.

Thus the sliding surface is divided into smaller segments, which can be mounted and exchanged separately. Thus the mounting of the bearing is easier and also the exchange of the sliding surface is easier.

In a preferred embodiment the segments are arranged and connected within the plain bearing in a way that the exchange of an individual segment is permitted.

Thus a segment of the sliding surface can be exchanged without the need to exchange the complete sliding surface of the bearing. Thus just those segments that are worn are exchanged while those parts, that are still good enough, stay in the bearing. Thus material and maintenance time is saved.

Thus the parts that are exchanged are smaller then the complete sliding surface. Thus the exchange of parts of the sliding surface can be done during maintenance without the use of heavy machinery. Thus the maintenance is cheaper and faster.

The segments of the sliding surface are small enough, so that they can be handled within the wind turbine. Thus the exchange can be performed from within the wind turbine and the wind turbine doesn't have to be dismantled. Thus the exchange does not depend on the weather conditions at the side of the wind turbine.

This is especially advantageous when the wind turbine is an offshore wind turbine.

In a preferred embodiment the segment comprises at least one tipping pad, while the surface of the tipping pad is capable to be aligned to the bearing surface of the counter side of the bearing.

A tipping pad is a pad capable to tilt its surface in a way that the sliding surface aligns to the bearing surface of the counter side of the bearing. A tipping pad can be a tilting pad or a flexure pad for example.

Thus the pad can tilt and the surface of the tipping pad arranges itself to the counter side of the bearing. Thus the forces acting on the bearing act equally distributed on the sliding surface. Thus the wear and tear on the sliding surface is equally distributed. Thus the lifetime of the segments is improved and the risks of damages in the bearing, which are caused by uneven wear and tear, are reduced.

In a preferred embodiment the bearing is a hydrodynamic bearing, where a lubrication film at the sliding surface is maintained by the rotating bearing parts.

Thus the lubrication film is maintained during the rotation of the bearing. Thus the lubrication of the bearing surface is independent of additional aggregates, like pumps. Thus the risk of damage due to insufficient lubrication is minimized. Thus the performance of the wind turbine is increased.

In a preferred embodiment the bearing is a hydrostatic bearing, where a lubrication film at the sliding surface is maintained by an applied pressure of an external pump.

Thus the lubrication is ensured independently of the rotation of the drive train. Thus the lubrication is also ensured when the wind turbine is stopping or starting rotation. Thus the lubrication is also sufficient in a low wind situation or in a situation when the wind is changing in speed and the wind turbine might stop and start repeatedly.

In a preferred embodiment the bearing is a hybrid bearing, where a lubrication film at the sliding surface is maintained by a combination of an applied pressure of an external pump and by rotating bearing parts.

The pump is only needed, when the wind turbine is starting or stopping rotation and the lubrication film can not be ensured just by the rotation of the rive train.

Thus the lubrication is maintained independently of the rotation of the drive train. In addition the energy used to operate the pump can be saved when rotation of the drive train is maintaining the lubrication film and the pump are not needed.

In a preferred embodiment the sliding surface of the plain bearing comprises a groove and/or a pocket, being used as inlet or outlet for lubrication purposes of the plain bearing.

The lubrication can be distributed more equally by the help of grooves or pockets in the sliding surface. Thus the lubrication is more equally. Thus the risk of insufficient lubrication and thus the risk of damage in the bearing are reduced. Thus the lifetime of the bearing can be enhanced and the energy production of the wind turbine can be increased.

The invention is shown in more detail by help of figures. The figures show a preferred configuration and do not limit the scope of the invention.
FIG 1 shows a wind turbine with a plain bearing.
FIG 2 shows a second configuration of the plain bearing of FIG 1.

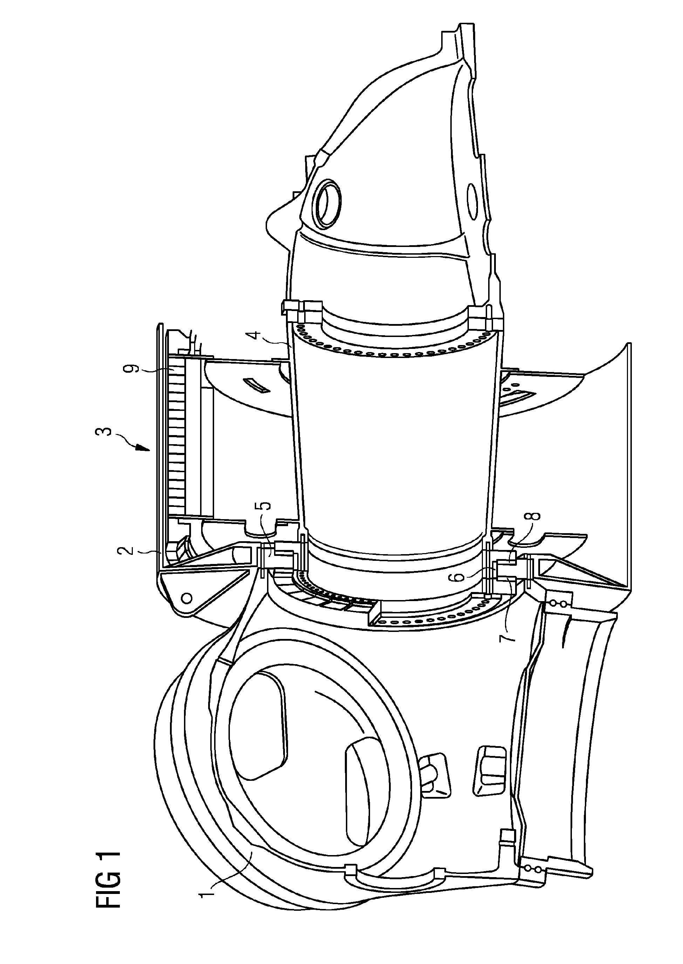

FIG 1 shows a longitudinal cut through the hub 1, the plain bearing 5 and the electrical generator 3 of a direct driven wind turbine. The longitudinal cut is going along the axis of rotation of the electrical generator 3 of the wind turbine.

The hub 1 is connected to the rotor 2 of the generator and to the rotating side of the bearing 5. The stator 9 of the generator 3 and the stationary side 4 of the wind turbine are connected to the stationary side of the plain bearing 5.

The plain bearing 5 is located between the hub 1 of the wind turbine and the electrical generator 3 of the wind turbine. It is connected with the stationary side to the hub-sided end of the stator 9 of the generator 3 and with the rotating side to the hub 1 of the wind turbine.

The plain bearing 5 connects the rotating drive train of the wind turbine with the stator 9 of the generator and the stationary part 4 of the wind turbine in a rotatable manner.

The rotating drive train comprises the hub 1 of the wind turbine that is connected to the rotor 2 of the electrical generator 3. The stationary part of the wind turbine comprises the stator 9 of the electrical generator 3. The bearing 5 connects the rotating drive train of the wind turbine and the rotor 2 of the electrical generator 3 with the stator 9 of the electrical generator 3.

The plain bearing 5 is constructed to bear the radial and axial forces and the bending moments present in the drive train.

The plain bearing 5 shows a cylindrical bearing surface 6 and two radial bearing surfaces 7, 8. In this example there is only one bearing 5, with the sliding surfaces 6, 7, 8 that connect the rotating drive train of the wind turbine with the stationary part 4 of the wind turbine.

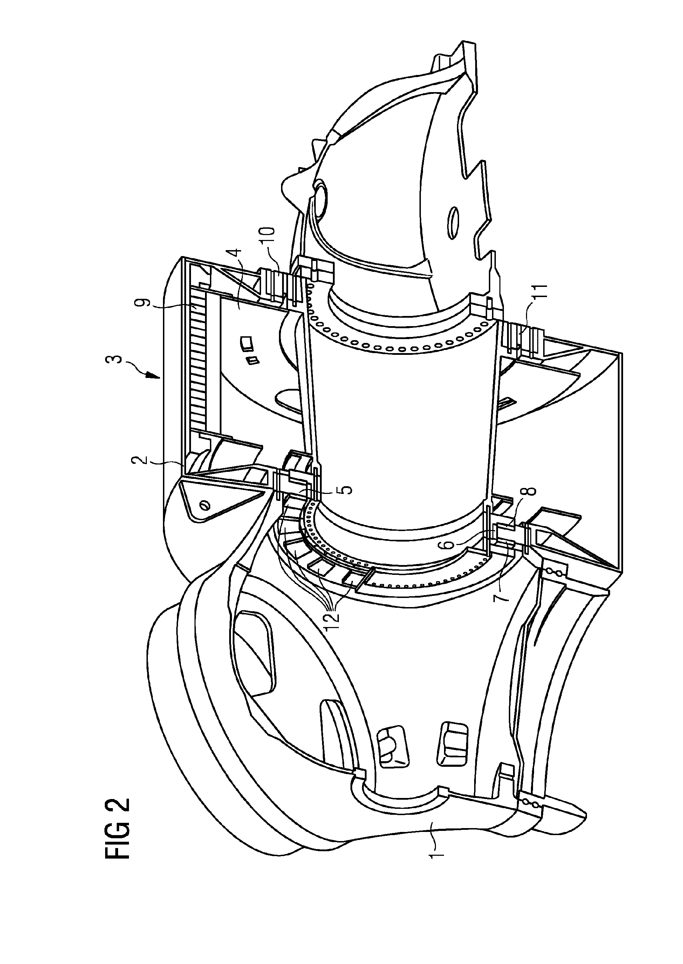

FIG 2 shows a second configuration of the plain bearing of FIG 1.

FIG 2 shows a cut along the axis of rotation of the electrical generator 3. The cut shows the hub 1 of the wind turbine, the rotor 2 and the stator 9 of the electrical generator 3, the plain bearing 5 and the stationary part 4 of the wind turbine.

The bearing surface 6, 7, 8 is equipped with segments 12 that are connected in the bearing to build the sliding surface 6, 7, 8.

The segments can be tilting pads. The surface of the tilting pads is capable to be aligned to the bearing surface of the counter side of the bearing 5, which is sliding along the pads when the bearing 5 is rotating.

The first plain bearing 5 is combined with a second bearing 10. The second bearing 10 is a plain bearing that is located at the second end of the electrical generator 3.

The second end of the electrical generator 3 is the end opposite the end where the first bearing 5 is located. Opposite ends of the electrical generator 3 are seen in respect to the axis of rotation of the generator.

The second bearing 10 is a shown as a plain bearing with a cylindrical bearing surface 11. The second bearing can also be a rolling element bearing or a plain bearing with a tilted bearing surface like a tapered bearing.

The first plain bearing 5 and the second plain bearing 10 are constructed to bear the radial and axial forces and the bending moments present in the drive train of the wind turbine.

## Claims

1. Direct-drive wind turbine,
- wherein a rotor (1) of the wind turbine is directly connected with a rotating drive train of the wind turbine,
- wherein the rotating drive train is directly connected with a rotor (2) of a electrical generator (3) of the wind turbine,
- wherein the rotating drive train is connected with a stationary part (4) of the wind turbine via at least one bearing (5), which allows the rotation of the drive train in relation to the stationary part,
- wherein the at least one bearing (5) is a plain bearing,
- wherein the bearing (5) comprises at least one cylindrical sliding surface (6) constructed to support radial loads present in the drive train,
- wherein the bearing (5) comprises at least two radial bearing surfaces (7, 8) with a surface area constructed to support axial loads and bending moments present in the drive train,
- wherein the surface areas of the radial bearing surfaces (7, 8) is dimensioned proportional to a predetermined maximum total load of the bending moments expected in the drive train.

2. Direct-drive wind turbine according to claim 1, wherein the surface areas of the radial bearing surfaces (7, 8) is indirect proportional to the inner radius of the radial bearing surfaces.

3. Direct-drive wind turbine according to one of the preceding claims, wherein the surface area of each of the radial bearing surfaces (7, 8) is larger then the surface area of the cylindrical sliding surface (6).

4. Direct-drive wind turbine according to one of the preceding claims, wherein the bearing (5) connects as a first bearing the rotor (2) and the stator (9) of the wind turbine generator (3) and where the first bearing (5) is located at a first end of the generator in respect to the axis of rotation of the generator (3).

5. Direct-drive wind turbine according to one of the preceding claims, wherein a second bearing (10) is arranged at a second end of the generator (3) in respect to the axis of rotation of the generator (3).

6. Direct-drive wind turbine according to one of the preceding claims, wherein the second bearing (10) is a plain bearing and comprises a cylindrical bearing surface (11), which is prepared to support radial loads and bending moments of the drive train.

7. Direct-drive wind turbine according to one of the preceding claims,
- wherein the bearing (5, 10) comprises a segmented sliding-surface (6, 7, 8, 11), and
- wherein the segments (12) of the sliding-surface (6, 7, 8, 11) are arranged at a rotating part of the bearing, which is connected to the rotating drive train of the wind turbine, or
- wherein the segments (12) are arranged at a stationary part of the bearing, which is connected to the stationary part (4) of the wind turbine.

8. Direct-drive wind turbine according to claim 7, wherein the segments (12) are arranged and connected within the plain bearing in a way that the exchange of an individual segment is permitted.

9. Direct-drive wind turbine according to claim 7 or claim 8, wherein the segment (12) comprises at least one tipping pad, while the surface of the tipping pad is capable to be aligned to the bearing surface of the counter side of the bearing.

10. Direct-drive wind turbine according to one of the preceding claims, wherein the bearing (5, 10) is a hydrodynamic bearing, where a lubrication film at the sliding surface is maintained by the rotating bearing parts.

11. Direct-drive wind turbine according to one of the claims 1 to 8, wherein the bearing (5, 10) is a hydrostatic bearing, where a lubrication film at the sliding surface is maintained by an applied pressure of an external pump.

12. Direct-drive wind turbine according to one of the claims 1 to 8, wherein the bearing (5, 10) is a hybrid bearing, where a lubrication film at the sliding surface is maintained by a combination of an applied pressure of an external pump and by rotating bearing parts.

13. Direct-drive wind turbine according to one of the preceding claims, wherein the sliding surface (6, 7, 8, 11) of the plain bearing (5, 10) comprises a groove and/or a pocket, being used as inlet or outlet for lubrication purposes of the plain bearing (5, 10).
